# EUROPEAN PATENT APPLICATION

(11) **EP 2 833 501 A1**
(43) Date of publication of application: **04.02.2015**
(21) Application number: 13767885.0
(22) Date of filing: 26.03.2013
(51) Int. Cl.: H02J 7/00

(54) **VEHICLE-MOUNTED MOBILE PHONE CHARGING DEVICE AND AUTOMOBILE**

(30) Priority: 27.03.2012 JP 2012070803
(71) Applicant: Panasonic Corporation, Kadoma-shi, Osaka 571-8501 (JP)
(72) Inventor: NAKAYAMA, Tsukasa, Osaka 540-6207 (JP); ARAKI, Yukihiro, Osaka 540-6207 (JP)
(74) Representative: Vigand, Philippe
(86) International application number: PCT/JP2013/002047
(87) International publication number: WO 2013/145716

(57) **Abstract**

An upper section of a biasing plate inside a holding section is pivotally supported at a position away from a mounting surface of a main body case, and a lower section thereof is inclined in a direction toward the mounting surface of the main body case. Since the lower section of the biasing plate is biased using a spring toward the mounting surface of the main body case, when a mobile phone is taken out, the upper section of the mobile phone can be pulled out forward and upward, furthermore, when the lower section of the mobile phone has passed through the lower section of the biasing plate, the lower section of the mobile phone is pushed upward by the biasing plate, whereby a click feeling is given to the user.

## Description

### Technical Field

The present invention relates to a vehicle-mounted mobile phone charging device and an automobile.

### Background Art

As mobile phones are improved in functionality, the power consumption thereof becomes very large. For this reason, in some mobile phones, the built-in battery thereof can use only one day.

Hence, in recent years, it has been proposed to install a mobile phone charging device inside a vehicle.

For example, the charger described in Patent Document 1 includes a main body case disposed in an upright state, and a holding section. A mounting surface for a mobile phone is provided on the front surface side of the main body case. The holding section is disposed so as to cover the lower front surface side of the mounting surface of the main body case. The lower section of the mobile phone is inserted into the holding section, and a biasing member biases the mobile phone forward from behind the mounting surface to prevent the mobile phone in that state from rattling.

### Prior Art Document

### Patent Document

Patent Document 1: Japanese Patent No. 3829094

### Summary of the Invention

### Problem that the Invention is to solve

The charger described above is configured so that the biasing unit biases a mobile phone forward from behind the mounting surface. With this configuration, although rattling during charging can be prevented, operability at the time of taking out the mobile phone after charging is poor.

In other words, at the time of taking out the mobile phone, the mobile phone cannot be taken out unless the biasing of the biasing unit is released. Hence, it is required to improve usability, that is, to improve operability at the time of taking out the mobile phone.

An object of the present invention is to provide a vehicle-mounted mobile phone charging device and an automobile with improved operability at the time of taking out a mobile phone.

### Means for solving the Problem

The present invention provides a vehicle-mounted mobile phone charging device equipped with a main body case disposed in an upright state, and on the front surface side of which a mounting surface for a mobile phone is provided; a charging coil provided on a back surface side of the mounting surface inside the main body case; and a holding section disposed so as to cover a lower front surface side of the mounting surface of the main body case, wherein the holding section has an insertion port for the mobile phone, the insertion portion being provided on an upper surface of the holding section and a biasing unit for biasing the mobile phone toward the mounting surface inside the holding section; wherein the biasing unit has a biasing plate, an upper section of which is pivotally supported at a position away from the mounting surface of the main body case by a first predetermined distance and a lower section of which is installed so as to be inclined in a direction toward the mounting surface of the main body case; and a spring for biasing the lower section of the biasing plate toward the mounting surface of the main body case. Advantage of the Invention

The device according to the present invention is equipped with the main body case disposed in the upright state, and on the front surface side of which the mounting surface for the mobile phone is provided; the charging coil provided on the back surface side of the mounting surface inside the main body case; and the holding section disposed so as to cover the lower front surface side of the mounting surface of the main body case, wherein the holding section has the mobile phone insertion port provided on the upper surface of the holding section and the biasing unit for biasing the mobile phone toward the mounting surface_inside the holding section; the biasing unit has the biasing plate, the upper section of which is pivotally supported at the position away from the mounting surface of the main body case by the first predetermined distance and the lower section of which is installed so as to be inclined in the direction toward the mounting surface of the main body case; and the spring for biasing the lower section of the biasing plate toward the mounting surface of the main body case, whereby usability at the time of taking out the mobile phone is excellent.

In other words, in the present invention, the holding section has the insertion port provided on the upper surface of the holding section and the biasing unit for biasing the mobile phone toward the mounting surface side inside the holding section; the biasing unit has the biasing plate, the upper section of which is pivotally supported at the position away from the mounting surface of the main body case by the first predetermined distance and the lower section of which is installed so as to be inclined in the direction toward the mounting surface of the main body case; and the spring for biasing the lower section of the biasing plate toward the mounting surface side of the main body case, whereby, when the mobile phone is taken out, the upper section of the mobile phone can be pulled out forward and upward, furthermore, when the lower section of the mobile phone has passed through the lower section of the biasing plate, the lower section of the mobile phone is pushed upward by the biasing plate, whereby a click feeling is given to the user. As a result, operability at the time of taking out the mobile phone from the charging device can be improved.

### Brief Description of the Drawings

FIG. 1 is a perspective view showing a vehicle-mounted mobile phone charging device according to an embodiment;
FIG. 2 is a partially cutaway perspective view showing the vehicle-mounted mobile phone charging device according to the embodiment;
FIG. 3 is a cross-sectional view showing the vehicle-mounted mobile phone charging device according to the embodiment;
FIG. 4 is a partially cutaway perspective view showing the vehicle-mounted mobile phone charging device according to the embodiment;
FIG. 5 is a cross-sectional view showing the vehicle-mounted mobile phone charging device according to the embodiment;
FIG. 6 is a partially cutaway perspective view showing the vehicle-mounted mobile phone charging device according to the embodiment;
FIG. 7 is a cross-sectional view showing the vehicle-mounted mobile phone charging device according to the embodiment;
FIG. 8 is a cross-sectional view showing the vehicle-mounted mobile phone charging device according to the embodiment;
FIG. 9 is a cross-sectional view showing the vehicle-mounted mobile phone charging device according to the embodiment;
FIG. 10 is a cross-sectional view showing the vehicle-mounted mobile phone charging device according to the embodiment;
FIG. 11 is a partially cutaway perspective view showing the vehicle-mounted mobile phone charging device according to the embodiment;
FIG. 12 is a cross-sectional view showing the vehicle-mounted mobile phone charging device according to the embodiment;
FIG. 13 is a perspective view showing the vehicle-mounted mobile phone charging device according to the embodiment;
FIG. 14 is a side view showing the vehicle-mounted mobile phone charging device according to the embodiment;
FIG. 15 is a cross-sectional view showing the vehicle-mounted mobile phone charging device according to the embodiment;
FIG. 16 is a cross-sectional view showing the vehicle-mounted mobile phone charging device according to the embodiment;
FIG. 17 is a cross-sectional view showing the vehicle-mounted mobile phone charging device according to the embodiment;
FIG. 18 is a cross-sectional view showing the vehicle-mounted mobile phone charging device according to the embodiment;
FIG. 19 is a cross-sectional view showing the vehicle-mounted mobile phone charging device according to the embodiment;
FIG. 20 is a cross-sectional view showing the vehicle-mounted mobile phone charging device according to the embodiment;
FIG. 21 is a cross-sectional view showing the vehicle-mounted mobile phone charging device according to the embodiment; and
FIG. 22 is a cross-sectional view showing the vehicle-mounted mobile phone charging device according to the embodiment.

### Mode for Carrying out the Invention

An embodiment according to the present invention will be described below using the accompanying drawings.

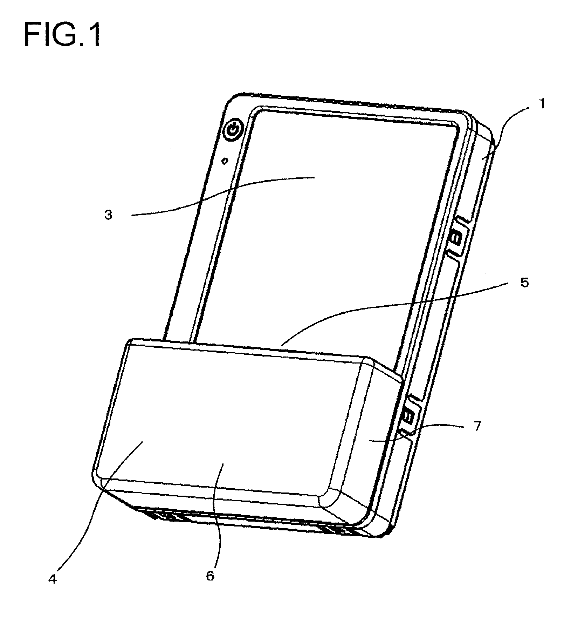

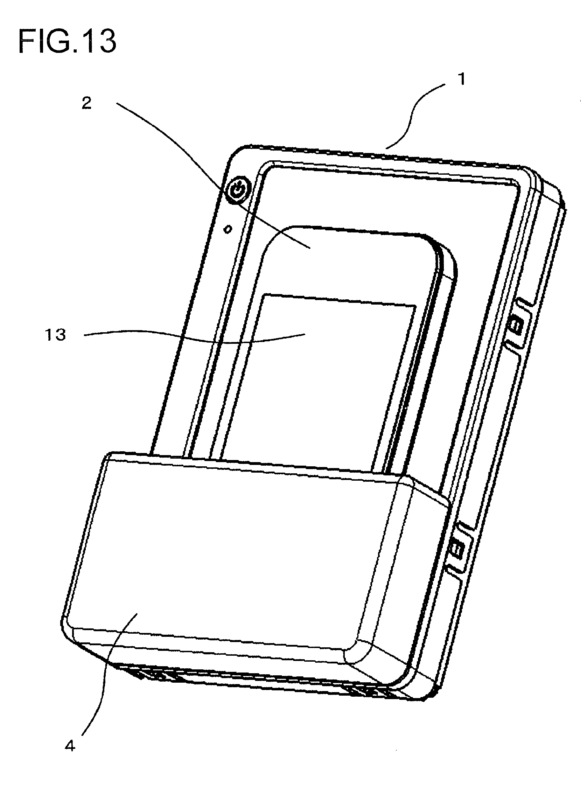

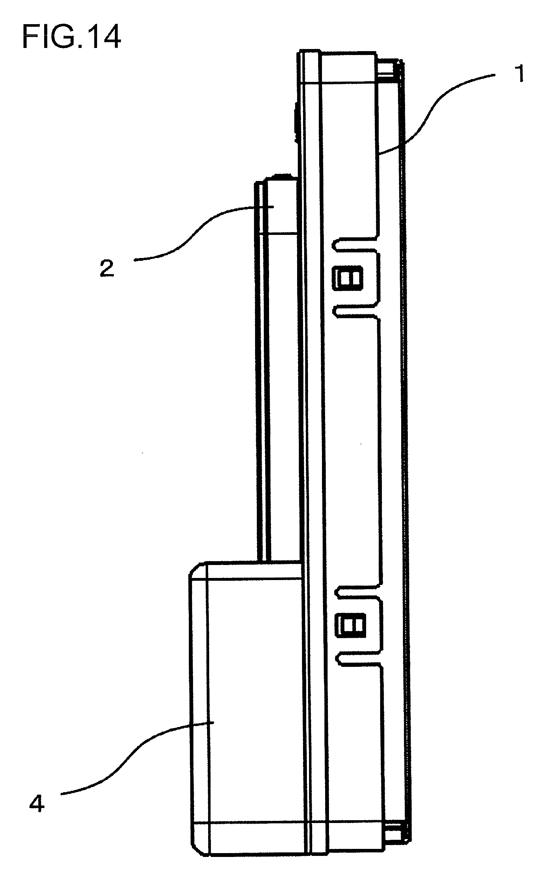

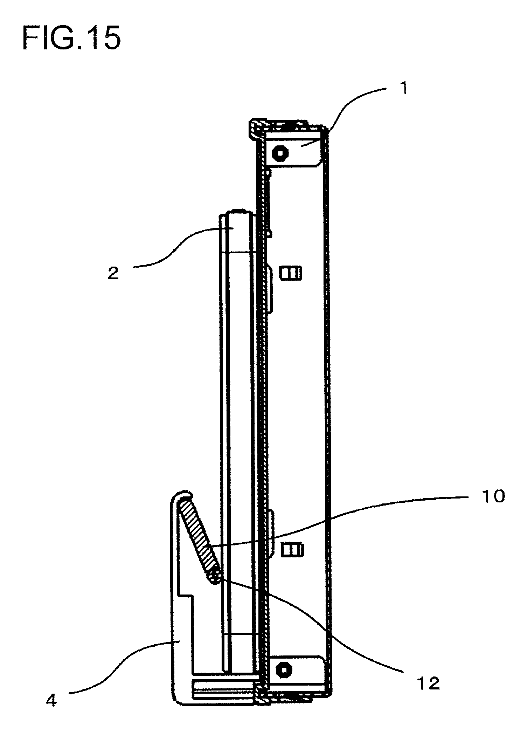

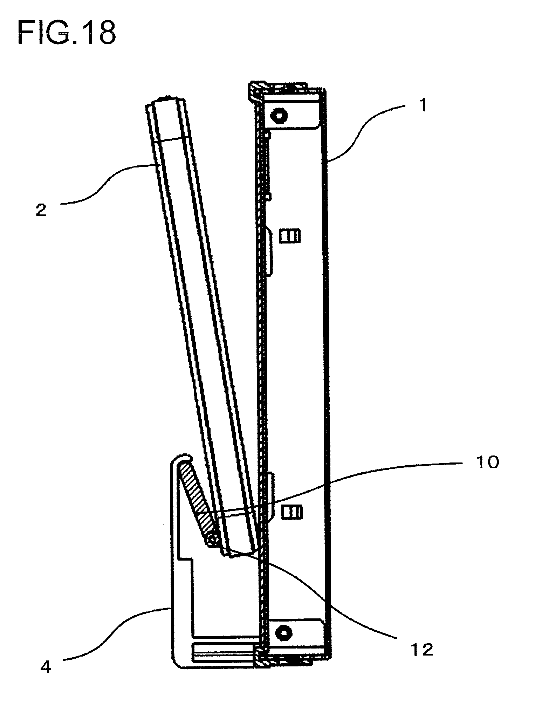

FIGS. 1 to 22 are perspective views, partially cutaway perspective views or cross-sectional views showing a vehicle-mounted mobile phone charging device according to the embodiment of the present invention. The vehicle-mounted mobile phone charging device according to the embodiment is equipped with a main body case 1, a charging coil (not shown) and a holding section 4. The vehicle-mounted mobile phone charging device is installed on an automobile while the main body case 1 is disposed in an upright state.

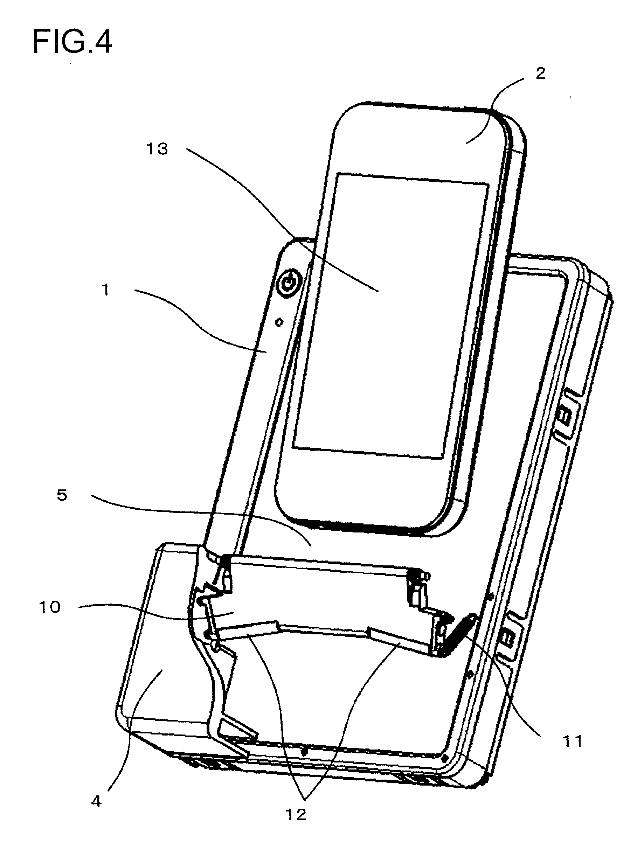

As shown in FIGS. 1 to 3, a mounting surface 3 for a mobile phone indicated by numeral 2 in FIG. 4 is provided on the front surface side of the main body case 1 having a vertically long rectangular shape and disposed in the upright state. Inside the main body case 1, the charging coil is provided on the back surface side of the mounting surface 3.

The holding section 4 is provided so as to cover the lower front surface side of the mounting surface 3 of the main body case 1.

The horizontal cross-section of the holding section 4 has a U-shape. On the upper surface of the holding section 4, a rectangular insertion port 5 into which the lower section of the mobile phone 2 is inserted is formed.

In other words, the holding section 4 having the U-shaped horizontal cross-section has a front surface 6, side surfaces 7 and a bottom surface 8, and the upper surface thereof serves as the insertion port 5.

In addition, inside the holding section 4, a biasing unit 9 for biasing the mobile phone 2 toward the side of the mounting surface 3 is provided.

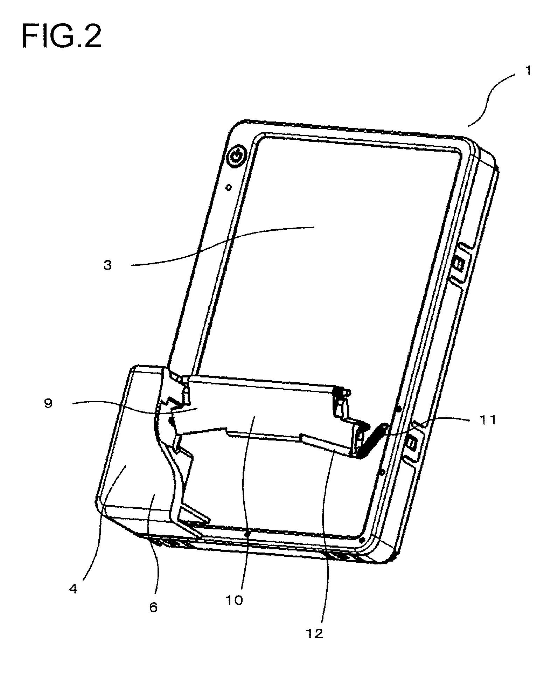

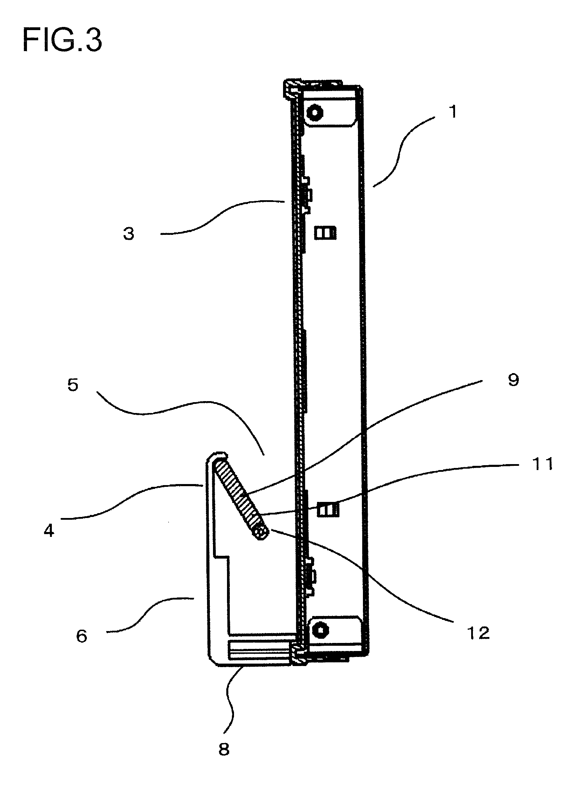

The biasing unit 9 has a biasing plate 10 and springs 11 as shown in FIGS. 2 and 3. The upper section of the biasing plate 10 is pivotally supported inside the side surfaces 7 at a position away from the mounting surface 3 of the main body case 1 by a first predetermined distance, and the lower section thereof is installed so as to be inclined in the direction toward the mounting surface 3 of the main body case 1. The springs 11 bias the lower section of the biasing plate 10 toward the mounting surface 3 of the main body case 1.

On both sides of the upper section of the biasing plate 10, the upper ends of the springs 11 are connected to the same portions as the pivot support portions of the biasing plate 10 or to portions that are closer to the side of the mounting surface 3 of the main body case 1 than the pivot support portions. Furthermore, the lower ends of the springs 11 are connected to both sides of the lower section of the biasing plate 10.

Hence, the lower section of the biasing plate 10 is in a state of being biased in a counterclockwise direction in the state shown in FIG. 3, that is, toward the mounting surface 3 of the main body case 1.

Furthermore, restriction sections (not shown) for preventing the lower section of the biasing plate 10 from rotating more intensely in the above-mentioned counterclockwise direction, that is, toward the mounting surface 3 of the main body case 1 are provided on the side surfaces 7 of the holding section 4.

In the state shown in FIG. 3, the distance between the lower section of the biasing plate 10 and the mounting surface 3 of the main body case 1 is smaller than the distance between the upper section of the biasing plate 10 and the mounting surface 3 of the main body case 1.

Moreover, rotation biasing members 12 are provided on both sides of the lower section of the biasing plate 10 as shown in FIG. 2.

Each rotation biasing member 12 has a cylindrical shape, and a rotation shaft passes through the central section thereof.

Besides, each rotation biasing member 12 is installed in an inclined state so that the outer portion thereof on the side of the side surface 7 of the holding section 4 is lower than the inner portion thereof as shown in FIG. 2.

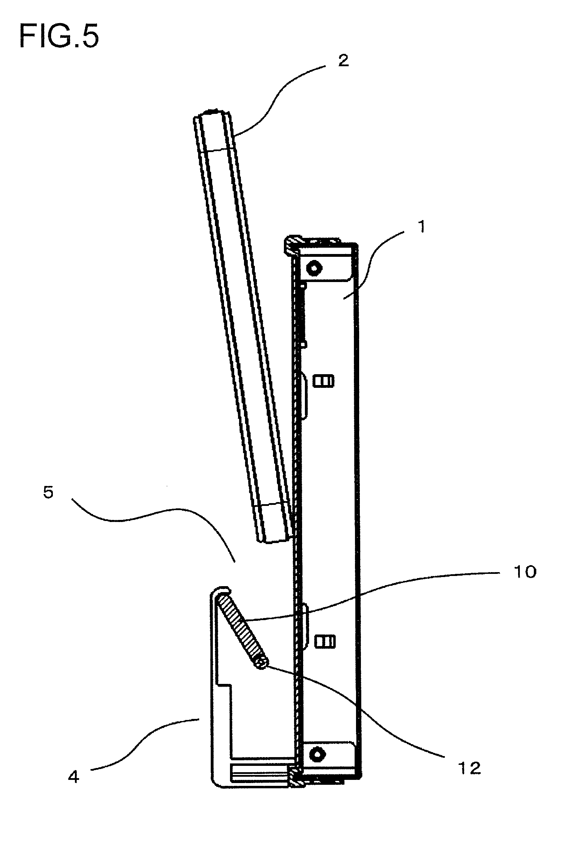

When the mobile phone 2 is charged using the vehicle-mounted mobile phone charging device according to this embodiment, the lower section of the mobile phone 2 is inserted through the insertion port 5 on the upper side of the holding section 4 of the main body case 1 as shown in FIGS. 4 and 5.

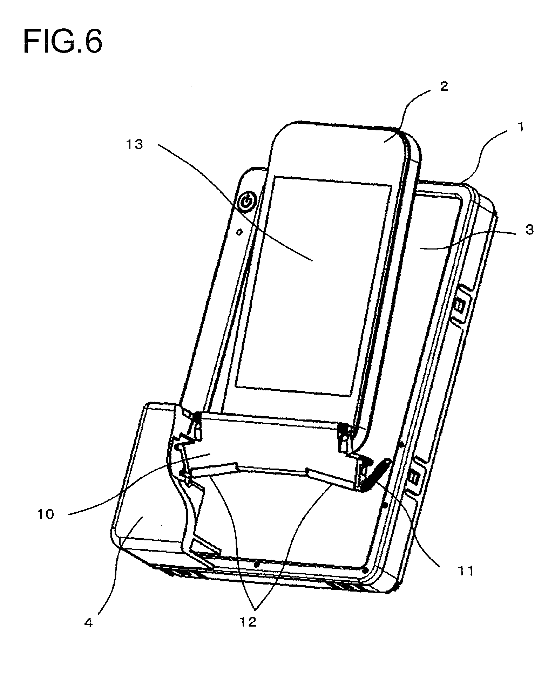

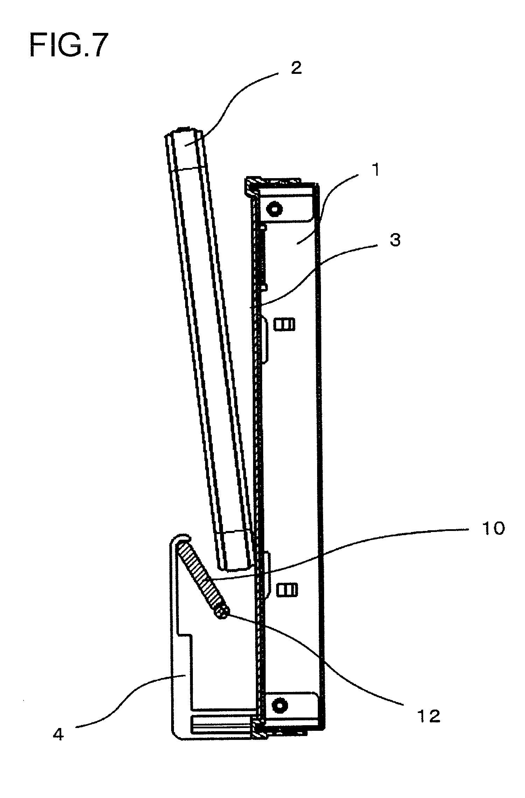

Then, the lower section of the mobile phone 2 first enters the insertion port 5 as shown in FIGS. 6 and 7; at this time, the lower section of the mobile phone 2 does not yet make contact with the upper surface of the biasing plate 10.

In other words, the insertion port 5 on the upper side of the holding section 4 has an opening sufficiently larger than the thickness of the mobile phone 2. In addition, the distance between the upper section of the biasing plate 10 and the mounting surface 3 of the main body case 1 is sufficiently larger than the thickness of the mobile phone 2. Hence, immediately after the lower section of the mobile phone 2 is inserted through the insertion port 5, the lower section of the mobile phone 2 does not make contact with the upper surface of the biasing plate 10.

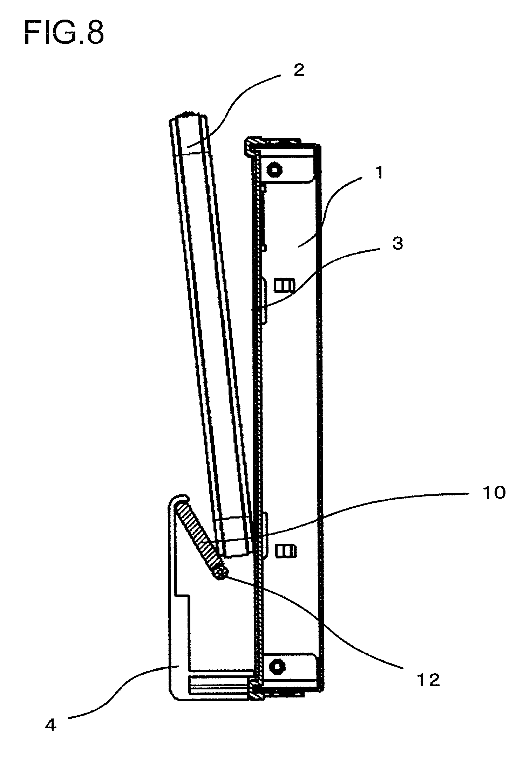

When the mobile phone 2 is lowered further thereafter, the lower section of the mobile phone 2 makes contact with the upper surface of the biasing plate 10 as shown in FIG. 8.

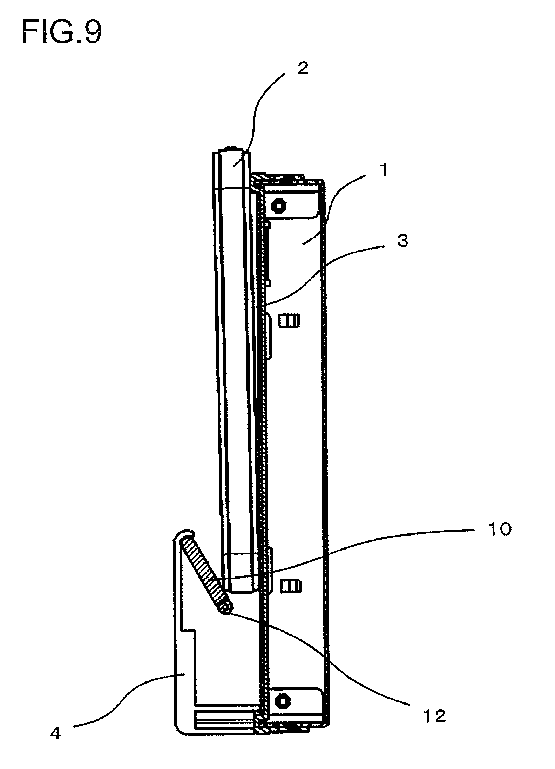

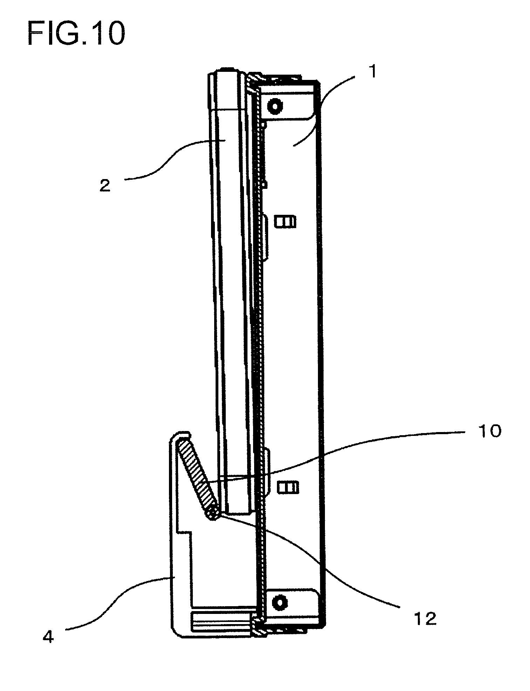

When the mobile phone 2 is lowered further from this state, as shown in FIGS. 9 and 10, the lower section of the mobile phone 2 rotates the lower section of the biasing plate 10 in a clockwise direction in the state shown in FIGS. 9 and 10 against the biasing forces of the springs 11.

The rotation biasing members 12 serve as the lower section of the biasing plate 10 with which the lower section of the mobile phone 2 makes contact at this time, and the mobile phone 2 lowers while rotating the rotation biasing members 12 clockwise.

Furthermore, the rotation biasing members 12 making contact with the lower section of the mobile phone 2 are positioned on the sides of the mobile phone 2, thereby not damaging the display section 13 of the mobile phone 2.

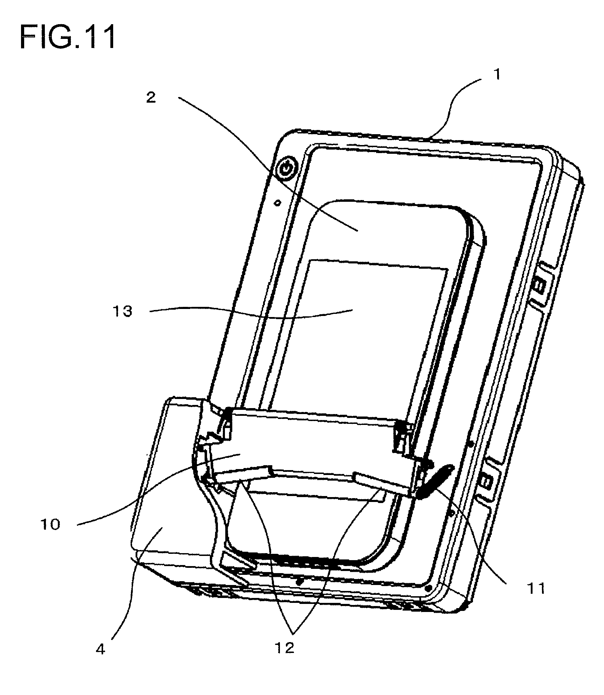

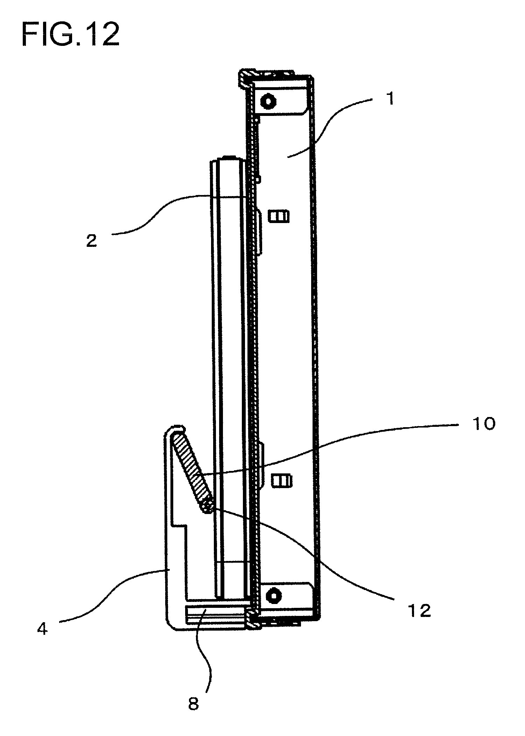

When the lower section of the mobile phone 2 is biased by the biasing plate 10 toward the mounting surface 3 of the main body case 1, the mobile phone 2 is also disposed in an upright state as shown in FIGS. 9 and 10. After the mobile phone 2 has been disposed in the upright state, the upper section of the mobile phone 2 is pushed downward and the lower section of the mobile phone 2 is pressed against the bottom surface 8 as shown in FIGS. 11 and 12.

The state shown in FIGS. 11 to 15 is a state in which the mobile phone 2 is made contact with the mounting surface 3 of the main body case 1 by the biasing plate 10, and the mobile phone 2 is charged in this state.

In other words, the charging coil (not shown) of the mobile phone 2 is opposed to the charging coil (not shown) inside the main body case 1, and a magnetic flux is made to pass through these charging coils, whereby the battery (not shown) of the mobile phone 2 is charged.

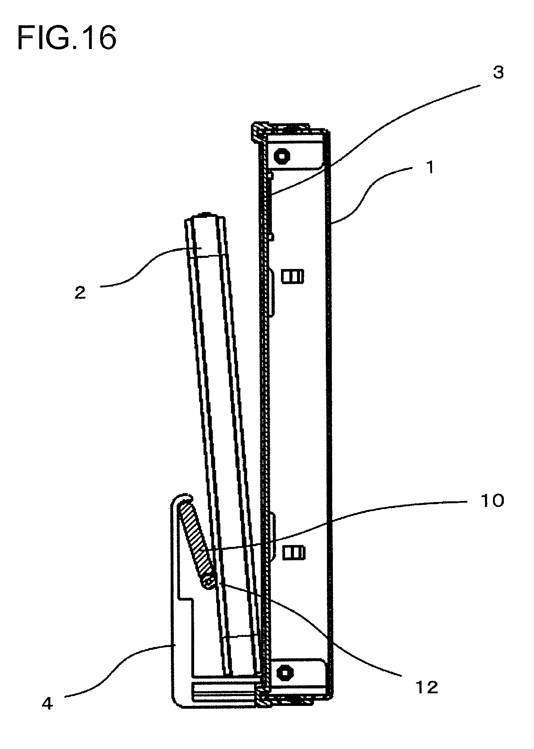

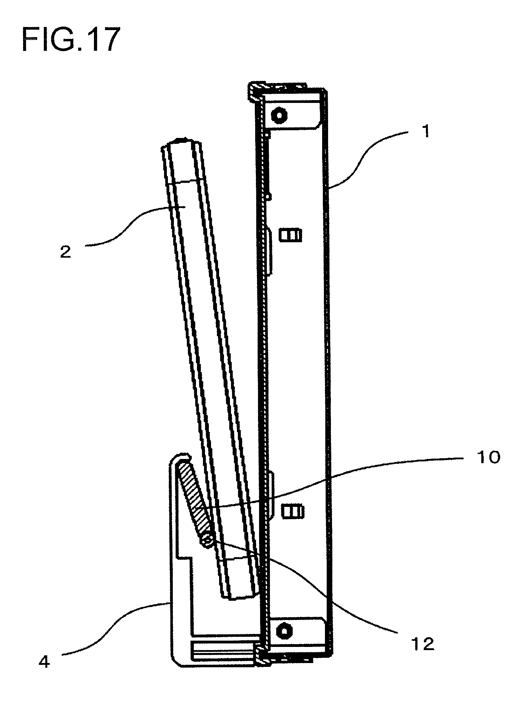

When the mobile phone 2 is removed from the holding section 4 after the charging of the battery of the mobile phone 2, the upper section of the mobile phone 2 is inclined forward (in the direction opposite to the direction toward the mounting surface 3 of the main body case 1) as shown in FIG. 16, and then the mobile phone 2 is pulled out as shown in FIGS. 17, 18 and 19.

At this time, as also understood by referring to FIG. 16, when the upper section of the mobile phone 2 is inclined forward (in the direction opposite to the direction toward the mounting surface 3 of the main body case 1), the rotation biasing members 12 making contact with the lower section of the mobile phone 2 serve as fulcrums, whereby this operation can be performed easily.

Furthermore, since the rotation biasing members 12 make contact with the lower section of the mobile phone 2 also when the mobile phone 2 is pulled out, the mobile phone 2 can be pulled out smoothly by virtue of the rotation of the rotation biasing members 12.

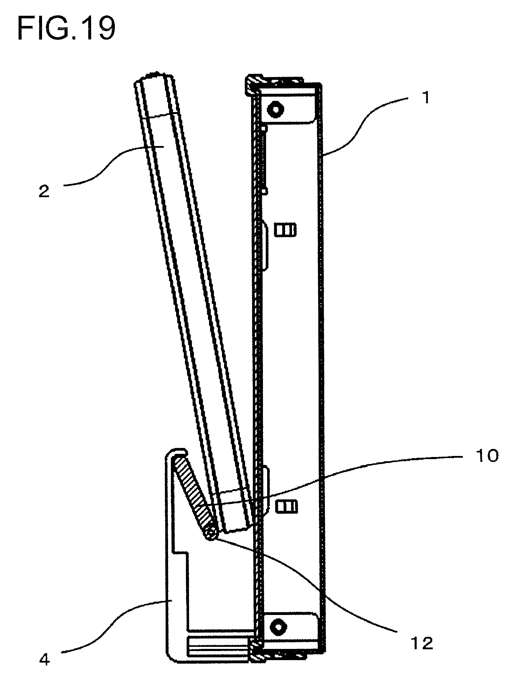

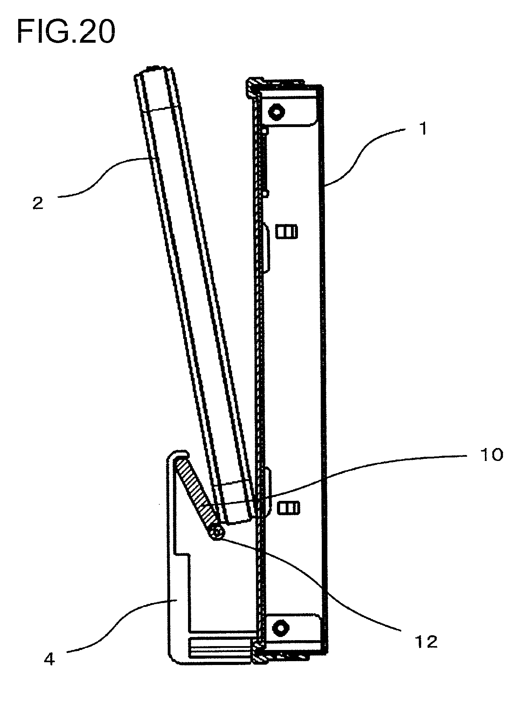

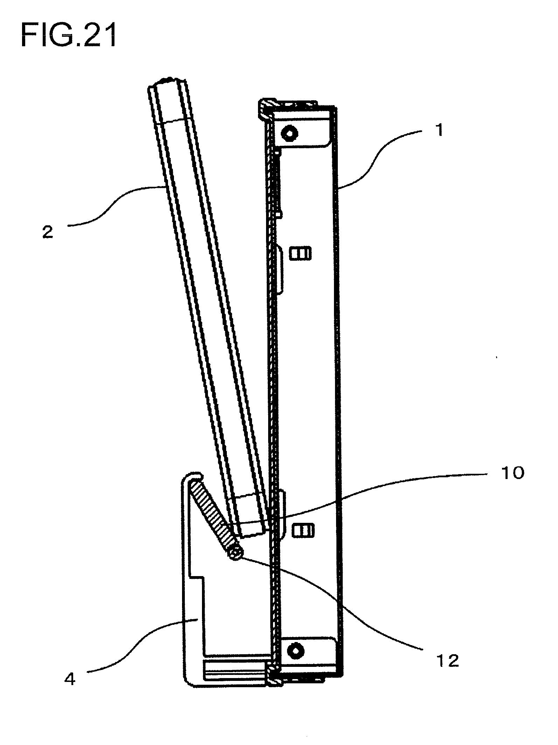

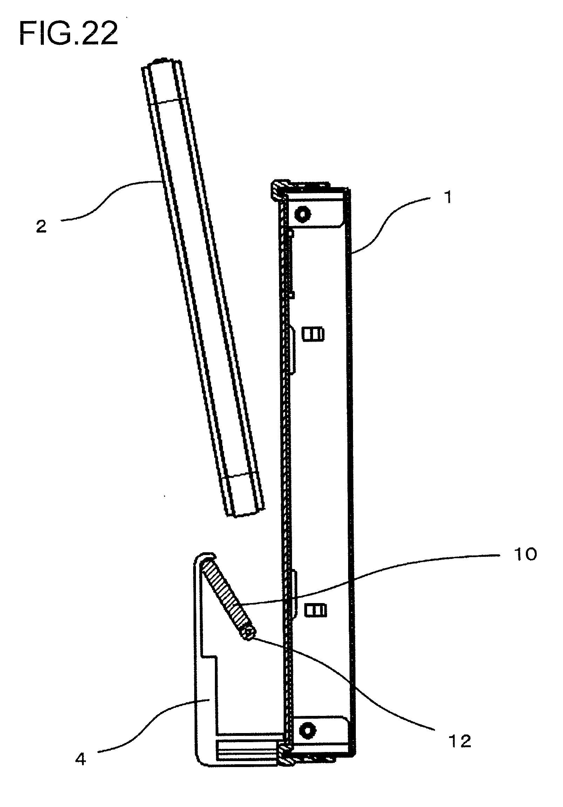

Then, when the state shown in FIG. 20 is reached, the lower section of the mobile phone 2 becomes in a state of having ridden on the upper surface of the biasing plate 10 and also becomes in a state of being pushed up by the action of the biasing plate 10 that is held in the state shown in FIG. 20 and biased by the spring 11 in the counterclockwise direction. As a result, the mobile phone 2 can be pulled out smoothly as shown in FIGS. 21 and 22. Moreover, from the state shown in FIG. 19 to the state shown in FIG. 20, the lower section of the mobile phone 2 is pushed up by the upper surface of the biasing plate 10, whereby a click feeling is given to the user. Although an example in which the vehicle-mounted mobile phone charging device is installed on an automobile while the main body case 1 is disposed in the upright state has been described in this embodiment, the vehicle-mounted mobile phone charging device may be installed on an automobile so as to be inclined such that the upper section of the main body case 1 is directed rearward and such that the lower section thereof is directed forward.

Although the present invention has been described in detail referring to the specific embodiment, it is obvious to those skilled in the art that various changes and modifications can be made without departing from the spirit and scope of the present invention.

This application is based on Japanese Patent Application (JP-2012-070803) filed on March 27, 2012, the contents of which are hereby incorporated by reference.

### Industrial Applicability

In the charging device according to the present invention, the biasing unit provided inside the holding section has the biasing plate, the upper section of which is pivotally supported at the position away from the mounting surface of the main body case by the first predetermined distance and the lower section of which is installed so as to be inclined in the direction toward the mounting surface of the main body case, and the springs for biasing the lower section of the biasing plate toward the mounting surface side of the main body case; hence, when the mobile phone is taken out, the upper section of the mobile phone can be pulled out forward and upward; furthermore, when the lower section of the mobile phone has passed through the lower section of the biasing plate, the lower section of the mobile phone is pushed upward by the biasing plate, whereby a click feeling is given to the user. As a result, the usability of the device is excellent.

Therefore, the charging device is expected to be utilized as a vehicle-mounted mobile phone charging device.

### Description of Reference Numerals and Signs

- 1: main body case
- 2: mobile phone
- 3: mounting surface
- 4: holding section
- 5: insertion port
- 6: front surface
- 7: side surface
- 8: bottom surface
- 9: biasing unit
- 10: biasing plate
- 11: spring
- 12: rotation biasing member
- 13: display section

## Claims

1. A vehicle-mounted mobile phone charging device comprising:
a main body case disposed in an upright state, and on a front surface side of which a mounting surface for a mobile phone is provided;
a charging coil provided on a back surface side of the mounting surface inside the main body case; and
a holding section disposed so as to cover a lower front surface side of the mounting surface of the main body case,
wherein the holding section has:
an insertion port for the mobile phone, the insertion portion being provided on an upper surface of the holding section; and
a biasing unit for biasing the mobile phone toward the mounting surface inside the holding section;
wherein the biasing unit has:
a biasing plate, an upper section of which is pivotally supported at a position away from the mounting surface of the main body case by a first predetermined distance and a lower section of which is installed so as to be inclined in a direction toward the mounting surface of the main body case; and
a spring for biasing the lower section of the biasing plate toward the mounting surface of the main body case.

2. The vehicle-mounted mobile phone charging device according to claim 1, wherein rotation biasing members are provided on both sides of the lower section of the biasing plate.

3. The vehicle-mounted mobile phone charging device according to claim 1, wherein the holding section is provided with a restriction section to stop the lower section of the biasing plate at a position away from the mounting surface of the main body case by a second predetermined distance; and
wherein the second predetermined distance is smaller than the first predetermined distance.

4. An automobile on which the vehicle-mounted mobile phone charging device according to any one of claims 1 to 3 is installed in an upright state.

5. The automobile according to claim 4, wherein the vehicle-mounted mobile phone charging device is installed so as to be inclined such that the upper section of the vehicle-mounted mobile phone charging device is directed rearward and such that the lower section of the vehicle-mounted mobile phone charging device is directed forward.
